# EUROPÄISCHE PATENTANMELDUNG

(11) **EP 4 198 330 A1**
(43) Veröffentlichungstag der Anmeldung: **21.06.2023**
(21) Anmeldenummer: 21216067.5
(22) Anmeldetag: 20.12.2021
(51) Int. Cl.: F16C 32/06, F16C 33/10, F16C 17/02

(54) **AEROSTATISCHES LAGER**

(71) Anmelder: Siemens Energy Global GmbH & Co. KG, 81739 München (DE)
(72) Erfinder: Miny, Kevin, 45130 Essen (DE)

(57) **Zusammenfassung**

Die Erfindung betrifft ein aerostatisches Lager (1) umfassend eine Hülse (3), die im Betrieb um eine Welle (2) angeordnet ist, wobei die Hülse (3) in der axialen Richtung (5) jeweils einen Endbereich (6, 7) umfasst und der Endbereich (6, 7) eine Zuspeisung (8, 8a, 9, 9a) zum Einströmen eines Gases zwischen der Hülse (3) und der Welle (2) aufweist, wobei die der Welle (2) zugewandte Oberfläche (15) der Hülse (2) Mittel zur Verwirbelung des Gases aufweist.

## Beschreibung

Die Erfindung betrifft ein aerostatisches Lager umfassend eine Hülse, die im Betrieb um eine Welle angeordnet ist, wobei die Hülse in der axialen Richtung jeweils einen Endbereich umfasst und der Endbereich eine Zuspeisung zum Einströmen eines Gases zwischen der Hülse und der Welle aufweist.

In vielen technischen Bereichen werden aerostatische Lager eingesetzt. Eines dieser Bereiche ist der Strömungsmaschinenbau, wobei hier insbesondere beim Bau von Turboverdichtern aerostatische Lager eingesetzt werden.

Allerdings verfügen aerostatische Lager für den Einsatz in Turboverdichtern über vergleichsweise geringe Dämpfungseigenschaften. Der Grund liegt darin, dass die Viskosität des Gasfilms, der sich zwischen dem aerostatischen Lager und einer zu lagernden Welle ausbildet, bis zu 600 mal kleiner sein kann als die Viskosität eines Lageröls.

Über den Lagerdruck kann die Lagersteifigkeit zwar beeinflusst werden, die Viskosität und damit die Dämpfungseigenschaften lassen sich hierüber aber nicht signifikant steigern.

In handelsüblichen aerostatischen Lagern existieren vereinzelte Dämpfungsbohrungen, welche zu Kammern führen in denen Dämpfungsarbeit aufgrund von Kompression und Entspannung des Gases Entropie erzeugt wird. Für eine Verdichteranwendung im hohen Drehzahlbereich ist dies nicht ausreichend.

Daher werden Dämpfungselemente um das Lager herum angeordnet, welche eine ausreichende Dämpfung bereitstellen, um beispielsweise eine kritische Biegeeigenfrequenz zu durchfahren. Wünschenswert wäre es ein verbessertes aerostatisches Lager zu haben.

Die Erfindung hat es sich ausgehend von den bekannten Problemen und Nachteilen des Standes der Technik im Bereich der Lager zur Aufgabe gemacht, Dämpfungseigenschaften eines Lagers zu verbessern.

Insbesondere soll die Dämpfungseigenschaft von aerostatischen Lagern verbessert werden.

Die Aufgabe wird gelöst durch ein aerostatisches Lager umfassend eine Hülse, die im Betrieb um eine Welle angeordnet ist, wobei die Hülse in der axialen Richtung jeweils einen Endbereich umfasst und der Endbereich eine Zuspeisung zum Einströmen eines Gases zwischen der Hülse und der Welle aufweist, wobei die der Welle zugewandte Oberfläche der Hülse Mittel zur Erhöhung der Verwirbelung und der Entropie des Gases aufweist.

Mit der Erfindung wird der Weg verfolgt, innerhalb des aerostatischen Lagers zwischen den Zuspeisungen eine Zone mit einer hohen Anzahl an Mitteln wie zum Beispiel Sacklochbohrungen zu versehen, welche einer Honeycomb bzw. Hole Pattern Dichtung gleichkommen. Die Dämpfungseigenschaften dieser Dichtungstypen sind so weit erforscht, dass sie sich vorhersagen lassen. So lassen sich die Eigenschaften einer Hole Pattern Dichtung auf ein aerostatisches Lager übertragen und das Dämpfungsverhalten zusätzlich erhöhen.

Bekannte Produkte setzen entweder auf poröse Materialien, wie z.B. Metallschäume oder porösen Graphit oder auf vereinzelte Dämpfungsbohrungen mit Kammern dahinter. Es wurde noch kein aerostatisches Lager bzw. Gaslager mit der Hole Pattern oder Honey Comb Dichtungstechnologie kombiniert.

Das vorhandene Wissen um diese Technologie aus der Verdichtertechnik machen eine Vorhersagbarkeit des verbesserten Dämpfungsverhaltens ohne größeren Aufwand wahrscheinlich.

Die rückbezogenen Unteransprüche betreffen vorteilhafte Weiterbildungen der Erfindung.

In einer ersten vorteilhaften Weiterbildung sind die Mittel als Sacklochbohrungen ausgebildet.

Dies ist eine vergleichsweise kostengünstige Möglichkeit die Hülse mit Mittel zu versehen, um die Verwirbelung zur erhöhen.

Vorteilhafterweise sind die Mittel in einem regelmäßigen Muster angeordnet. Dabei können viele Variationen angewendet werden. Zum einen können die Mittel derart entlang der axialen Richtung und in Umfangsrichtung angeordnet werden, dass sie ein zueinander senkrecht stehendes Muster aufweisen. Zum anderen können die Mittel auch wellenförmig über den Umfang angeordnet werden.

In einer vorteilhaften Weiterbildung ist die der Welle zugewandte Oberfläche der Hülse als Honeycomb-Dichtung ausgebildet. Honeycomb-Dichtungen sind bekannt und sind dadurch charakterisiert, dass sie Ähnlichkeit zu der Gestalt von Bienenwaben zeigen. Bienenwaben sind einfach herzustellen und bieten eine Möglichkeit einer guten Verwirbelung für das Gas.

In einer weiteren vorteilhaften Weiterbildung ist die der Welle zugewandte Oberfläche der Hülse als Hole Pattern-Dichtung ausgebildet.

In einer vorteilhaften Weiterbildung weist die Zuspeisung mehrere über den Umfang der Hülse verteilte Bohrungen auf. Dies ist eine vergleichsweise günstige Möglichkeit die Zuströmung des Gases in das Lager zu gestalten.

In einer weiteren vorteilhaften Weiterbildung weist die Zuspeisung einen entlang des Umfanges der Hülse angeordneten Schlitz auf.

Für eine gute Dämpfungseigenschaft gilt für die axiale Länge 1 der Hülse: D < 1 < 2D, wobei D der Durchmesser der Welle im Bereich der Hülse ist.

Für eine einfachere Montage bzw. Herstellung ist die Hülse vorteilhafterweise aus einem Hülsen-Oberteil und einem Hülsen-Unterteil ausgebildet.

Im Folgenden ist die Erfindung anhand spezieller Ausführungsbeispiele unter Bezugnahme auf Zeichnungen näher erläutert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese sollen die Ausführungsbeispiele nicht maßstäblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: Eine schematische Querschnitts-Darstellung eines erfindungsgemäßen Lagers
- Figur 2: Eine perspektivische Darstellung einer erfindungsgemäßen Hülse.

Begriffe wie axial, radial und Umfang sowie Umfangsrichtung beziehen sich auf eine zu lagernde Welle.

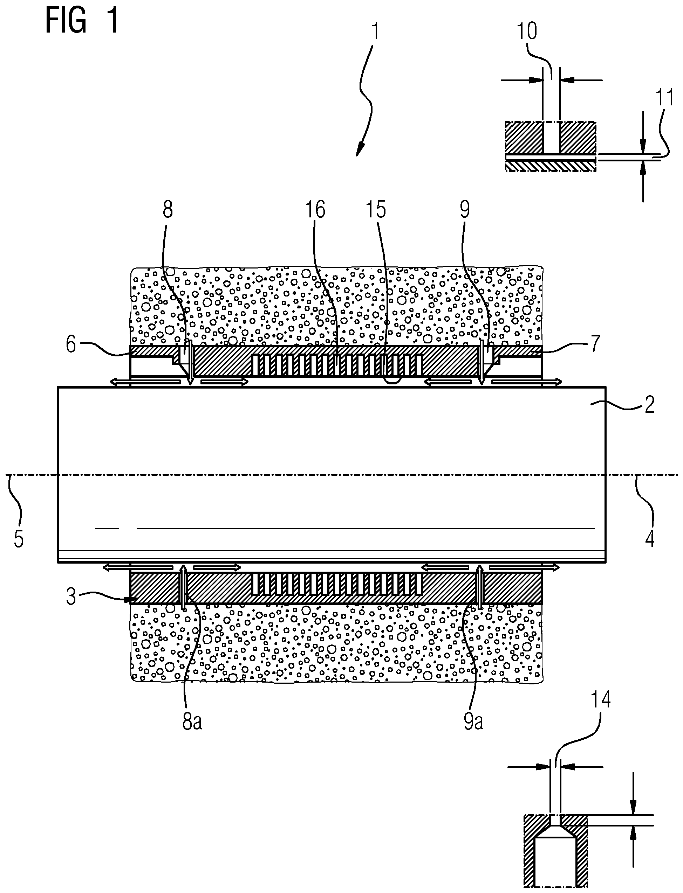

Die Figur 1 zeigt eine schematische Querschnitts-Darstellung eines erfindungsgemäßen Lagers 1. Das Lager 1 ist als aerostatisches Lager ausgeführt und ist zum Lagern einer Welle 2 ausgebildet. Die Welle 2 kann Teil eines Rotors für eine nicht näher dargestellte Rotationsmaschine, wie z.B. einer Strömungsmaschine beispielsweise eines Verdichters sein. Die Welle 2 ist hierbei ein vergleichsweises schweres Bauteil, das hinreichend gut gelagert werden muss, damit im Betrieb keine Schäden auftreten, wobei die Welle 2 um eine Rotationsachse 4 drehbar ausgebildet ist.

Das aerostatische Lager gemäß Figur 1 zeichnet sich durch eine Hülse 3 aus, dass um die Welle 2 angeordnet ist. Weitere Bauteile des aerostatischen Lagers sind aus Gründen der Übersichtlichkeit nicht näher dargestellt.

Die Hülse 3 ist in einer axialen Richtung 5 ausgebildet und umfasst jeweils einen ersten Endbereich 6 und einen zweiten Endbereich 7. Der erste Endbereich 6 weist eine erste Zuspeisung 8 auf, die zum Einströmen eines Gases ausgebildet ist. Dieses Gas wird in einen Spalt 9 zwischen der Hülse 3 und der Welle 2 eingeströmt. Das durch diese Zuspeisung 8 strömende Gas teilt sich nach der Zuspeisung 8 auf in einen Teil, der entlang der Wellenoberfläche in Richtung Hülse 3 strömt und in einen Teil, der entlang der Wellenoberfläche in Gegenrichtung zur Hülse 3 strömt. Die Strömung des Gases ist in der Figur 1 mit Pfeilen dargestellt, wobei aus Gründen der Übersichtlichkeit auf Bezugszeichen für die Pfeile verzichtet wurde.

Das Gas kann Luft oder ein ähnliches Medium sein.

Im zweiten Endbereich 7 ist ebenfalls eine Zuspeisung 9 angeordnet, die ähnlich zu der Zuspeisung 8 ausgebildet ist und die gleiche Funktion erfüllt. Auf eine erneute Beschreibung wird hiermit verzichtet, um unnötige Wiederholungen zu vermeiden.

Sowohl die Zuspeisung 8 als auch die Zuspeisung 9 sind jeweils als Schlitz ausgeführt, was am rechten oberen Bildrand der Figur 1 dargestellt ist.

Die Zuspeisungen 8 und 9 weisen einen Spalt mit einer Breite 10 auf, wobei das Gas in den Spalt mit der Spaltbreite 11 strömt. Auf dem im Spalt befindlichen Gaspolster wird die Welle 2 gelagert.

In einer alternativen Ausführungsform wird die Zuspeisung des Gases durch Bohrungen 12, 13 ausgeführt was in der Figur 1 unterhalb der Rotationsachse 4 gezeigt ist. Die Zuspeisungen 8a und 9a werden hierbei als über den gesamten Umfang verteilte Bohrungen 12, 13 mit einem Durchmesser 14 ausgebildet.

In der rechten unteren Ecke der Figur 1 ist eine vergrößerte Darstellung einer Bohrung 12, 13 zu sehen.

Zur Verbesserung der Lagereigenschaft wird nun die Hülse 3 auf der der Welle 2 zugewandten inneren Oberfläche 15 verändert. Und zwar wird die innere Oberfläche 15 derart verändert, dass sich die Entropie des Gases innerhalb des Spaltes erhöht und die Verwirbelung des Gases vergrößert wird. Dies wird durch Mittel erzeugt, die in einer ersten Ausführungsform als Vertiefungen wie z.B. Sacklochbohrungen ausgebildet sind, wie das in der Figur 1 in der Querschnittsansicht zu sehen ist. Aus Gründen der Übersichtlichkeit ist lediglich ein Sackloch mit dem Bezugszeichen 16 versehen.

Dabei werden die Sacklochbohrungen 16 derart verteilt, dass die Vielzahl der Sacklochbohrungen 16 ein regelmäßiges Muster ergibt. Das Muster wird hierbei über die gesamte innere Oberfläche 15 erzeugt, so dass um die gesamte Welle 2 die Mittel angeordnet sind.

In einer alternativen Ausführungsform wird die der Welle zugewandte Oberfläche 15 der Hülse 3 als Honeycomb-Dichtung ausgebildet. Aus Gründen der Übersichtlichkeit ist dies in der Figur 1 nicht dargestellt. Das Erscheinungsbild einer Honeycomb-Dichtung ist im Stand der Technik bekannt und ähnelt einer Bienenwabenstruktur.

In einer weiteren vorteilhaften Weiterbildung ist die der Welle 2 zugewandte Oberfläche 15 der Hülse 3 als Hole Pattern-Dichtung ausgebildet. Das Erscheinungsbild einer Hole Pattern-Dichtung ist ebenfalls im Stand der Technik bekannt und stellt ebenso ein effektives Mittel dar, um die Lagereigenschaften des Lagers 1 zu verbessern.

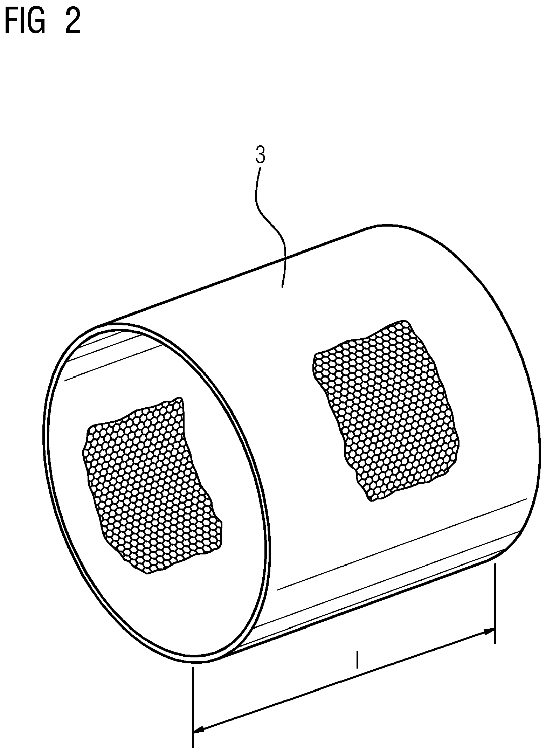

Die Figur 2 zeigt eine schematische perspektivische Darstellung der Hülse 3. Aus Gründen der Übersichtlichkeit wurde lediglich ein Bezugszeichen für die Hülse 3 verwendet. Die Anordnung der Sacklochbohrungen oder die Honeycomb-DichtungsStruktur ist in der Figur 2 deutlich zu sehen und wurde im Zusammenhang mit der Figur 1 bereits hinreichend beschrieben.

Die Hülse 3 weist eine axiale Länge 1 auf, die von im Wesentlichen von dem ersten Endbereich 6 bis zum zweiten Endbereich 7 verläuft. Es gilt: D < 1 < 2D, wobei D der Durchmesser der Welle 2 im Bereich der Hülse 3 ist. Der Durchmesser D ist in der Figur 1 oder Figur 2 nicht mit einem Bezugszeichen aus Gründen der Übersichtlichkeit dargestellt.

Der Durchmesser D der Welle 2 ist aus der Figur 1 ersichtlich.

Zur besseren Montage der Hülse 3 über die Welle 2 wird die Hülse 3 zumindest zweiteilig ausgeführt, und zwar mit Hülsen-Oberteil und einem Hülsen-Unterteil.

Auf eine Darstellung der Hülse 3 mit einem Hülsen-Oberteil und einem Hülsen-Unterteil wurde in der Figur 2 verzichtet.

Das Hülsen-Oberteil wird über geeignete Befestigungsmittel, wie z.B. Schrauben mit dem Hülsen-Unterteil verbunden. Andere Befestigungsmöglichkeiten wie Schweißen ist ebenfalls möglich.

## Patentansprüche

1. Aerostatisches Lager (1)
umfassend eine Hülse (3), die im Betrieb um eine Welle (2) angeordnet ist,
wobei die Hülse (3) in der axialen Richtung (5) jeweils einen Endbereich (6, 7) umfasst und der Endbereich (6, 7) eine Zuspeisung (8, 8a, 9, 9a) zum Einströmen eines Gases zwischen der Hülse (3) und der Welle (2) aufweist,
**dadurch gekennzeichnet, dass** die der Welle (2) zugewandte Oberfläche (15) der Hülse (3) Mittel zur Verwirbelung des Gases aufweist.

2. Aerostatisches Lager (1) nach Anspruch 1,
wobei die Mittel als Sacklochbohrungen (16) ausgebildet sind.

3. Aerostatisches Lager (1) nach Anspruch 1 oder 2,
wobei die Mittel in einem regelmäßigen Muster angeordnet sind.

4. Aerostatisches Lager (1) nach einem der vorhergehenden Ansprüche,
wobei die der Welle (2) zugewandte Oberfläche (15) der Hülse (3) als Honeycomb-Dichtung ausgebildet ist.

5. Aerostatisches Lager (1) nach einem der Ansprüche 1 bis 3,
wobei die der Welle (2) zugewandte Oberfläche (15) der Hülse (3) als Hole Pattern-Dichtung ausgebildet ist.

6. Aerostatisches Lager (1) nach einem der vorhergehenden Ansprüche,
wobei die Zuspeisung (8, 8a, 9, 9a) mehrere über den Umfang der Hülse (3) verteilte Sacklochbohrungen (16) aufweist.

7. Aerostatisches Lager (1) nach einem der vorhergehenden Ansprüche,
wobei die Zuspeisung (8, 8a, 9, 9a) einen entlang des Umfanges der Hülse (3) angeordneten Schlitz aufweist.

8. Aerostatisches Lager (1) nach einem der vorhergehenden Ansprüche,
wobei für die axiale Länge 1 der Hülse (3) gilt: D < 1 < 2D, wobei D der Durchmesser der Welle (2) im Bereich der Hülse (3) ist.

9. Aerostatisches Lager (1) nach einem der vorhergehenden Ansprüche,
wobei die Hülse (3) aus einem Hülsen-Oberteil und einem Hülsen-Unterteil ausgebildet ist.
